# EUROPEAN PATENT APPLICATION

(11) **EP 1 755 323 A1**
(43) Date of publication of application: **21.02.2007**
(21) Application number: 06016561.0
(22) Date of filing: 08.08.2006
(51) Int. Cl.: H04M 1/80, H04M 1/82, H04M 3/428, H04M 1/725

(54) **User-selectable music-on-hold for a communication device**

(30) Priority: 15.08.2005 US 708323 P; 28.07.2006 US 494633
(71) Applicant: Broadcom Corporation, Irvine, CA 92618-7013 (US)
(72) Inventor: Thyssen, Jes, Irvine CA 92618-7013 (US); Hale, Kelly H., Irvine CA 92618-7013 (US)
(74) Representative: Jehle, Volker Armin

(57) **Abstract**

A communication device receives an encoded signal from a primary input source. The encoded signal includes periods of speech and periods of non-speech. The communication device includes a decoder to decode the received signal to produce a decoded signal. A detector of the communication device detects the periods of speech and the periods of non-speech within the decoded signal. A controller of the communication device provides the decoded signal to an output of the communication device during the periods of speech. The controller interrupts the decoded signal during the periods of non-speech and provides an alternate input from a secondary input source to the communication device.

## Description

### CROSS-REFERENCE TO RELATED APPLICATIONS

This application claims the benefit of U.S. Provisional Application No. 60/708,323, filed on August 15, 2005, which is incorporated herein by reference in its entirety.
BACKGROUND OF THE INVENTION
Field of the Invention

The present invention generally relates to communication devices. More specifically, the present invention provides a communication device having the ability to detect periods of non-speech within a received media signal and to provide an alternative input to the communication device during the periods of non-speech.
Background Art

Communication devices often operate over narrowband channels. Speech encoders are used to generate voice signals of high perceptual quality and low bit rate that are suitable for transmission over low bandwidth channels. These encoders achieve high compression of voice signals by employing models tailored to speech. Under non-ideal conditions, however, the input signal to an encoder may include non-speech signals, such as on-hold silence or on-hold music. Consequently, the quality of non-speech signals may suffer as the model does not represent the non-speech signal well. Music is a signal that typically suffers in quality when encoded with a low bit-rate speech coder for transmission. As a result, the decoding of the non-speech signal by a decoder produces an output signal having low perceptual quality. Users of communication devices often find the quality of the decoded non-speech signal to be intolerable. Many of these users would prefer to not listen to the poorly decoded non-speech signal.
BRIEF SUMMARY OF THE INVENTION

Accordingly, the present invention is directed to a communication device having the ability to detect a non-speech signal within a received signal and the ability to replace the non-speech signal with a user-selectable alternative input.

In one embodiment of the present invention, a communication device receives an encoded signal from a primary input source. The encoded signal includes periods of speech and periods of non-speech. The communication device includes a decoder to decode the received signal to produce a decoded signal. A detector of the communication device detects the periods of speech and the periods of non-speech within the decoded signal. A controller of the communication device provides the decoded signal to an output of the communication device during the periods of speech. The controller interrupts the decoded signal during the periods of non-speech and provides an alternate input from a secondary input source to the communication device.
According to an aspect of the invention, a communication device is provided, comprising:
a decoder to decode a received signal from a first source, the received signal including a non-speech signal;
a detector to detect the non-speech signal within the decoded signal; and
a controller to select a second source to provide an alternative input to the communication device upon detection of the non-speech signal.
Advantageously, wherein the received signal is a voice communication signal.
Advantageously, the voice communication signal is encoded using a speech compression technique.
Advantageously, the first source is a remote communication device.
Advantageously, the received signal is received over a wireless link.
Advantageously, the received signal is received over a wired link.
Advantageously, the non-speech signal is on-hold silence.
Advantageously, the detector is a music detector.
Advantageously, the non-speech signal is on-hold music.
Advantageously, the received signal includes a flag to designate the non-speech signal.
Advantageously, the second source is an internal audio player and the alternative input is audio stored in an internal memory.
Advantageously, the second source is an internal audio player and the alternative input is audio received from a remote server.
Advantageously, the second source is an internal data transceiver and the alternative input is data received over a wired link.
Advantageously, the second source is an internal data transceiver and the alternative input is data received over a wireless link.
Advantageously, the internal data transceiver is a Bluetooth® transceiver and the wireless link operates according to a Bluetooth® standard.
Advantageously, the internal data transceiver is an Institute of Electrical and Electronics Engineers (IEEE) 802 wireless transceiver and the wireless link operates according to an IEEE 802 wireless standard.
Advantageously, the second source is an internal television receiver and the alternative input is a television signal.
Advantageously, the television signal is a terrestrially broadcasted television signal.
Advantageously, the internal television receiver is a satellite television receiver and the television signal is a satellite television signal.
Advantageously, the second source is an internal radio receiver and the alternative input is a radio signal.
Advantageously, the internal radio receiver is an AM/FM radio receiver and the radio signal is an AM/FM broadcasted radio signal.
Advantageously, the internal radio receiver is a satellite radio receiver and the radio signal is a satellite radio signal.
Advantageously, the controller selects the second source based on an input from a user of the communication device.
Advantageously, the controller de-selects the second source upon detection of a speech signal within the decoded signal by the detector.
According to an aspect of the invention, a method for providing a user-selectable secondary input to a communication device upon detection of a non-speech signal within a primary input to the communication device is provided, comprising:
receiving an encoded signal from the primary input;
decoding the encoded signal;
detecting a non-speech signal within the decoded signal; and
selecting the secondary input upon detection of the non-speech signal.
Advantageously, decoding comprises decoding the encoded signal according to a speech compression technique.
Advantageously, detecting comprises detecting on- hold silence within the decoded signal.
Advantageously, detecting comprises detecting on- hold music within the decoded signal.
Advantageously, selecting comprises selecting the secondary input based on an input from a user of the communication device.
Advantageously, the method further comprises de-selecting the secondary input upon detection of a speech signal within the decoded signal.
According to an aspect of the invention, a method for alternating between a primary input source and a secondary input source of a communication device is provided, comprising:
receiving a first input signal from the primary input source, wherein the first input signal is encoded using a speech compression technique and includes periods of speech and periods of non-speech;
decoding the first input signal according to the speech compression technique to produce a decoded voice communication signal;
detecting a period of non-speech within the decoded voice communication signal;
interrupting the voice communication signal during the period of non-speech;
providing a second input signal from the secondary input source to the communication device during the period of non-speech.
According to an aspect of the invention, a method for alternating between a primary input source and a secondary input source of a communication device is provided, comprising:
receiving a first input signal from the primary input source, wherein the first input signal is encoded using a speech compression technique and includes periods of speech and periods of non-speech;
decoding the first input signal according to the speech compression technique to produce a decoded voice communication signal;
detecting the periods of speech and the periods of non-speech within the decoded voice communication signal;
providing the first input signal to an output of the communication device during the periods of speech;
providing a second input signal from the secondary input source to the communication device during the periods of non-speech.
According to an aspect of the invention, a communications device is provided, comprising:
a decoder configured to generate a decoded output signal responsive to receiving an encoded input signal, the decoded output signal coupled to an output of the communications device; and
an alternative signal source that replaces the decoded output signal with an alternative signal when the encoded input signal includes a non-speech signal.
Advantageously, the encoded input signal is encoded using a speech compression technique, and the decoder is configured to decode the encoded input signal based on the speech compression technique used for encoding.
Advantageously, the alternative signal is switched-in for the decoded output signal based on a control signal that indicates the non-speech signal.
Advantageously, the control signal is embedded in the encoded input signal.
Advantageously, the control signal is received separate from encoded input signal.
Advantageously, the communications device further comprises a controller that triggers the alternative signal source based on the control signal.
Advantageously, the alternative signal source is an internal audio player that replaces the decoded output signal with audio stored in a memory device.
Advantageously, the alternative signal source is a receiver that replaces the decoded output signal with wireless content.
Advantageously, the wireless content is based one of a radio signal, a television signal, and email.

Additional features and advantages of the invention will be set forth in the description that follows, and in part will be apparent from the description, or may be learned by practice of the invention. The advantages of the invention will be realized and attained by the structure and particularly pointed out in the written description and claims hereof as well as the appended drawings.

It is to be understood that both the foregoing general description and the following detailed description are exemplary and explanatory and are intended to provide further explanation of the invention as claimed.
BRIEF DESCRIPTION OF THE FIGURES

The accompanying drawings illustrate the present invention and, together with the description, further serve to explain the principles of the invention and to enable one skilled in the pertinent art to make and use the invention.

FIG.1 illustrates a conventional cellular communications network.

FIG. 2 illustrates a conventional cellular telephone.

FIG. 3 illustrates a cellular telephone according to the present invention having the ability to detect a non-speech signal within a received signal and the ability to replace the non-speech signal with a user-selectable alternative input.

FIG. 4 provides a flowchart that illustrates operational steps in accordance with the present invention for providing a user-selectable secondary input to a communication device upon the detection of a non-speech signal within a primary input to the communication device.
DETAILED DESCRIPTION OF THE INVENTION

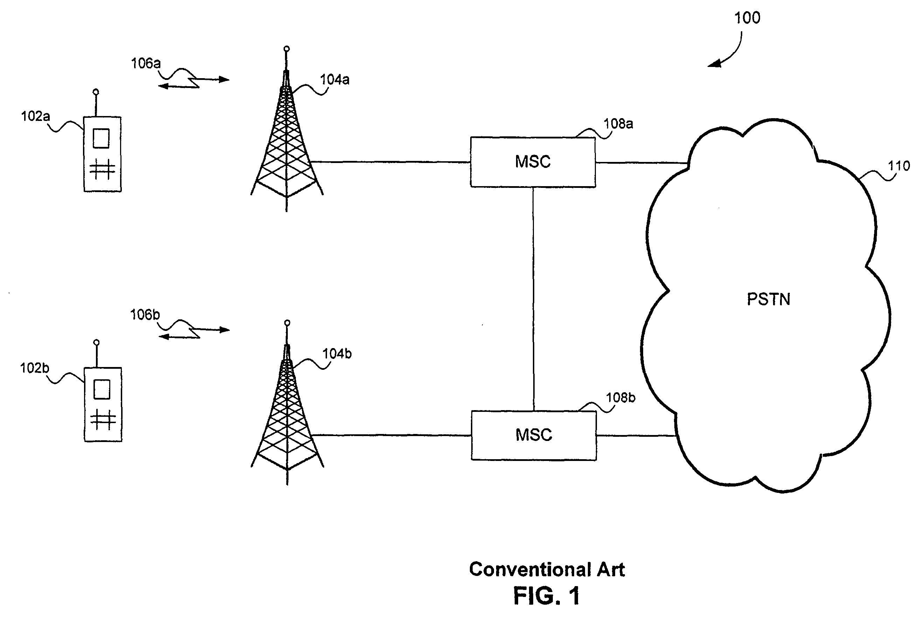

FIG. 1 illustrates a conventional cellular communications network 100. The conventional cellular communications network 100 includes cellular telephones 102. The cellular telephones 102 communicate with base stations 104 over two-way radio frequency (RF) links 106. Specifically, the cellular telephone 102-a communicates with the base station 104-a over the wireless RF link 106-a and the cellular telephone 102-b communicates with the base station 104-b over the wireless RF link 106-b. Each base station 104 may communicate with a number of cellular telephones 102 simultaneously.

As shown in FIG. 1, each base station 104 is connected to a mobile switching center (MSC) 108. The MSC 108-a can be connected to a number of base stations 104 and to a number of other MSCs 108. Similarly, the MSC 108-b can be connected to a number of base stations 104 and to a number of other MSCs 108. The MSCs 108 connect the base stations 104 to the Public Switched Telephone Network (PSTN) 110. In this way, the MSCs 108 provide connectivity between the mobile phones 102 and the PSTN 110. The PSTN 110 can include residential and commercial voice and data networks.

The architecture of the conventional cellular communications network 100 allows the cellular telephone 102-a to communicate with another cellular telephone 102, including the cellular telephone 102-b. The conventional cellular communications network 100 also enables communication between the cellular telephones 102 and communication devices connected to the PSTN 110. For example, the cellular telephones 102 can communicate with a landline phone or server connected to the PSTN 110.

The wireless RF links 106 are typically low data rate communication links originally designed to accommodate voice traffic. Many legacy networks within the PSTN 110 were also initially designed for voice communications only. Consequently, these legacy systems can be similarly limited by low bandwidth communication links. The conventional cellular communications network 100 can use speech encoding techniques to achieve low transmission rates over narrowband links. The speech encoding techniques are essentially speech compression algorithms. The speech compression algorithms are designed to provide the best quality voice signal at the lowest possible bit rate, given constraints on system complexity and signal delay. Speech coding systems can be implemented within the conventional cellular communications network 100 by using encoder-decoder pairs for the transmission and reception of voice signals over the RF links 106.

Representing an analog voice signal with a low bit rate digital signal can result in distortion of the original voice signal. Powerful coding techniques, such as linear predictive coding (LPC) coding, are capable of masking distortion to provide a highly compressed voice signal with high perceptual quality and low bit rate. These coding techniques can achieve high perceptual quality at low bit rates by exploiting redundancy in the original voice signal and by exploiting the nature of human auditory perception.

Many speech coding systems achieve high compression by assuming that the original input signal is pure speech. That is, many encoders encode all input signals with the algorithm designed mainly for speech and the decoder decodes the signals accordingly, and hence other signals may suffer in quality if transmitted over the connection using said coding system. Under realistic conditions, the input signal to an encoder may include background sounds or other noise, resulting in a reproduced signal by a corresponding decoder with increased distortions. Input signals to encoders can also be music signals. Music signals typically are poorly represented by many encoders primarily designed to accommodate speech. The result can be the reproduction of music received by a cellular telephone 102 of poor and objectionable quality.

Alternatively, many voice activity detectors (VADs) in encoders will classify music as noise and encode it as such, thereby causing a corresponding decoder in a cellular telephone 102 to output a signal of low perceptual quality. The decoders within cellular telephones 102 typically decode all signals blindly as they were encoded by the encoder, leaving the user of a cellular telephone 102 with no choice but to listen to signals of low quality if the input signal was poorly represented.

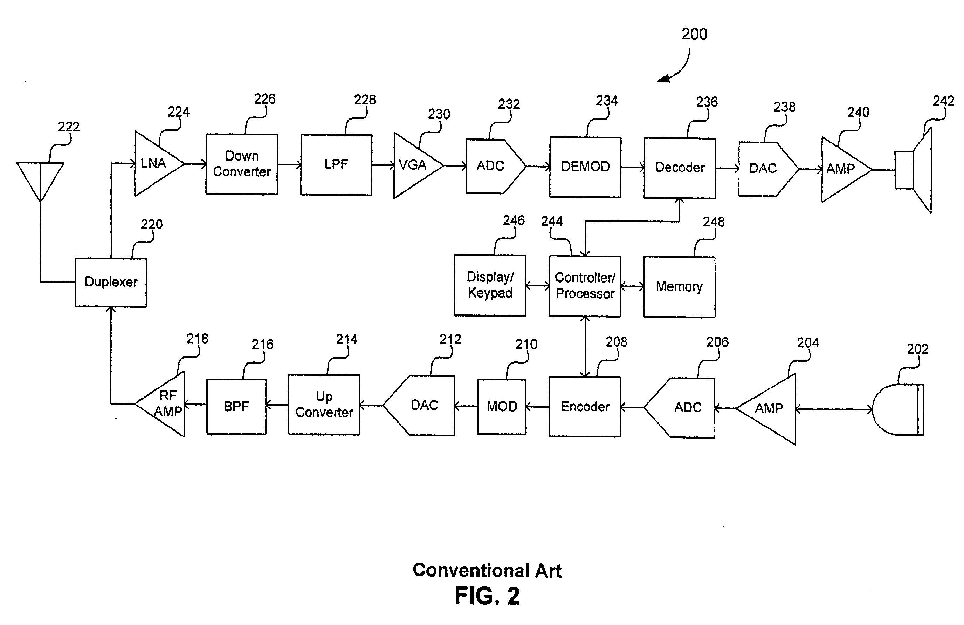

FIG. 2 illustrates a conventional cellular telephone 200. The conventional cellular telephone 200 represents a possible configuration of the cellular telephones 102 depicted in FIG. 1. The conventional cellular telephone 200 provides two-way wireless communication with a base station (e.g., a base station 104 depicted in FIG. 1). The conventional cellular telephone 200 includes a receive channel and a transmit channel to accommodate two-way communication. The receive and transmit channels of the conventional cellular telephone 200, as well as the basic operation of the conventional cellular telephone 200, are described below.

The transmit channel of the conventional cellular telephone 200 includes a microphone 202. The microphone 202 converts sound into an electrical signal. The analog output of the microphone 202 is amplified by an amplifier 204. The analog output of the amplifier 204 is converted to a digital signal by the analog-to-digital converter (ADC) 206. The digital signal generated by the ADC 206 is provided to an encoder 208. The encoder 208 implements a speech encoding algorithm to compress the digital signal into a low data rate signal. This low data rate speech signal is then modulated by a modulator 210. A digital-to-analog converter (DAC) 212 converts the digital output of the modulator back to an analog signal for wireless transmission. The output signal provided by the DAC 212 is typically a baseband or intermediate frequency signal. This output signal is up-converted to an appropriate RF bandwidth by an up-converter 214. A bandpass filter 216 is used to filter the output of the up-converter 214. Lastly, an RF amplifier 218 is used to amplify the transmit signal generated and processed by the conventional cellular telephone 200.

The transmit signal generated by the conventional cellular telephone 200 is provided to a duplexer 220. The duplexer 220 switches the conventional cellular telephone 200 between receiver and transmitter operation. During transmission, the duplexer 220 passes the output signal of the RF amplifier 218 to an antenna 222 for wireless transmission. During reception, the duplexer 220 passes a received signal at the antenna 222 to the receive channel of the conventional cellular telephone 200.

The receive channel of the conventional cellular telephone 200 includes a low noise amplifier (LNA) 224 to amplify a received RF signal from the antenna 222. The RF output signal of the LNA 224 is down-converted to a baseband or intermediate frequency signal by the down-converter 226 and subsequently filtered by a lowpass filter (LPF) 228. The output of the LPF 228 is then amplified by a variable gain amplifier (VGA) 230. The analog output of the VGA 230 is converted to a digital signal by an ADC 232. The digital output of the ADC 232 is demodulated by the demodulator 234 and passed to a conventional decoder 236. The conventional decoder 236 provides a decompressed digital signal to a DAC 238. The DAC generates an analog representation of the decompressed digital signal supplied by the conventional decoder 236. The analog output signal produced by the DAC 238 is provided to an amplifier 240 that drives a speaker 242. The speaker 242 converts an analog electrical signal from the amplifier 240 into sound.

As shown in FIG. 2, a controller 244 is connected to the receive and transmit channels of the conventional cellular telephone 200. The controller 244 manages and controls the operation of the constituent components of the conventional cellular telephone 200 including a display and keypad 246. The controller 244 also manages and controls a memory 248 of the conventional cellular telephone 200. The controller 244 can be connected to multiple components of the receive and transmit channels of the conventional cellular telephone 200.

The conventional cellular telephone 200 is capable of communicating with various communication devices including, for example, another cellular telephone, a landline phone or a remote server. Communication between the conventional cellular telephone 200 and a remote device is facilitated by a base station. Typically, communication between the conventional cellular telephone 200 and a base station is over a narrowband wireless link (e.g., an RF link 106 depicted in FIG. 1). Therefore, the conventional cellular telephone 200 and a corresponding base station exchange encoded signals of relatively low data rate. The encoded signals received by the conventional cellular telephone 200 may be encoded by the base station and/or encoded by any other device supplying a signal to the base station for transmission to the conventional cellular telephone 200.

The conventional cellular telephone 200 is primarily configured to send and receive voice signals. Voice communication signals are exchanged between the conventional cellular telephone 200 and a remote device after an active call is set-up or established between the two devices. Signals received by the conventional cellular telephone 200 during an active call are encoded using speech compression techniques. Consequently, both speech and non-speech signals within a signal originating from a remote device are encoded using speech compression techniques.

Speech signals include periods of speech or conversation between a user of the conventional cellular telephone 200 and a user of a remote device. Speech signals also include brief periods of silence or lulls in the conversation between a user of the conventional cellular telephone 200 and the user of the remote device. Non-speech signals include periods of music or silence transmitted to the conventional cellular telephone 200 during an active call. For example, non-speech signals include music or silence transmitted to the conventional cellular telephone 200 when the user of the remote device places the user of the conventional cellular telephone 200 on-hold. Non-speech signals do not include silence, noise or distortion caused by interference or fading during an active call. Non-speech signals also do not include silence, noise or distortion introduced during normal call setup or disconnection. Further, non-speech signals do not include silence, noise or distortion introduced during typical conversation (e.g., during brief lulls of a conversation).

Encoded voice communication signals received by the conventional cellular telephone 200 are processed by the conventional decoder 236. The conventional decoder 236 decodes a received encoded signal and generates a decoded signal. The decoded signal is subsequently provided to the speaker 242. The conventional decoder 236 decodes all received signals blindly and corresponding to the encoding technique prior to transmission. Further, the conventional decoder 236 is incapable of distinguishing speech signals from non-speech signals within the decoded signal. Consequently, non-speech signals within a received encoded signal are decoded by the conventional decoder 236 and outputted as an audio signal by the speaker 242. An encoder that codes on-hold music or on-hold silence as noise or speech will therefore provide a signal of low perceptual quality to a user of the conventional cellular telephone 200. As a result, a user of the conventional cellular telephone 200 must suffer through the reception of a low quality perceptual signal whenever a non-speech signal (e.g., on-hold silence or on-hold music) is transmitted to the conventional cellular telephone 200.

Music is often transmitted to the conventional cellular telephone 200 when a remote device places a call with the conventional cellular telephone 200 on hold. During hold times, music-on-hold services provide low quality music to the remote device for encoding and transmission to the conventional cellular telephone 200. Such music is often undesirable and can become intolerable if encoded poorly. Alternatively, no signal (i.e., silence) can be transmitted to the conventional cellular telephone 200 when a remote device places a call with the conventional cellular telephone 200 on hold.

Without the capability of detecting non-speech signals, the conventional detector 236 of the conventional cellular telephone 200 cannot distinguish between encoded speech signals and encoded non-speech signals or decoded speech signals and decoded non-speech signals. Further, without the capability of detecting non-speech signals, the conventional cellular telephone 200 cannot provide a mechanism by which a user can select an alternative input during reception of a non-speech signal. Alternative or secondary inputs may be desirable during non-speech signals since non-speech signals typically convey little information and are of little interest to a user of the conventional cellular telephone 200. For example, most users do not want to listen to music on-hold. Further, the efficiency and enjoyment of a user of the conventional cellular telephone 200 suffers when the user cannot select an alternative input during reception of a non-speech signal. Therefore, what is needed is a communication device having the ability to detect non-speech signals so that non-speech signals can be replaced or substituted with user-selectable alternative or secondary inputs.

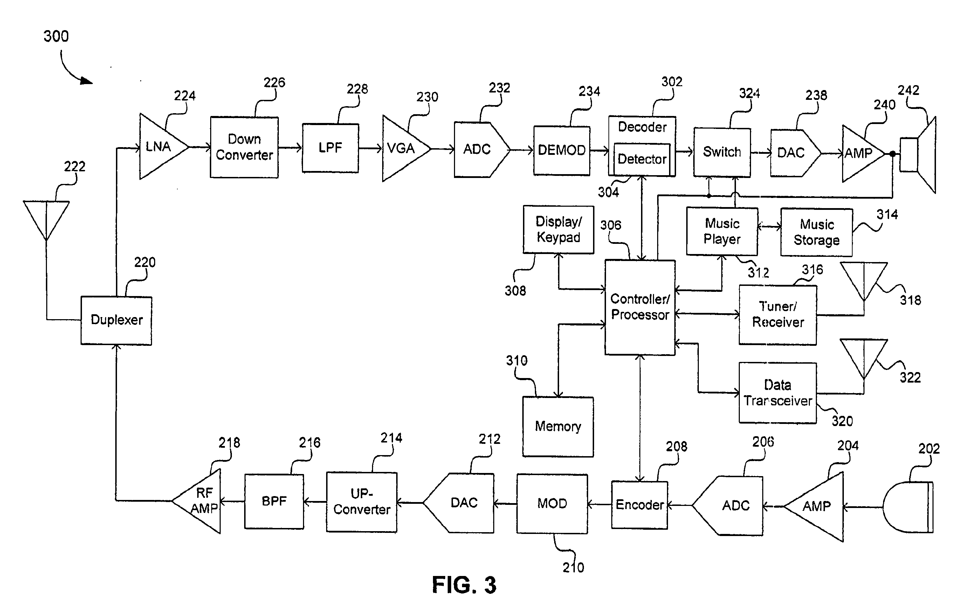

FIG. 3 illustrates a cellular telephone 300 having the ability to detect a non-speech signal within a received signal and the ability to replace the non-speech signal with a user-selectable alternative input. The detection capability of the cellular telephone 300 provided by the present invention allows the cellular telephone 300 to distinguish speech signals from non-speech signals. Specifically, the detection capability provided by the present invention allows the cellular telephone 300 to detect periods of on-hold music and on-hold silence within a received voice communication signal. Further, the present invention enables a user of the cellular telephone 300 to interact with a secondary input source during periods of non-speech within a received voice signal. In this way, a non-speech signal, which conveys little information through a signal of low perceptual quality, can be replaced with a desired user-selected input. Overall, the time a user of the cellular telephone 300 must spend listening to low perceptual quality signals is minimized or eliminated while simultaneously increasing the efficiency and experience of the user.

As shown in FIG. 3, the cellular telephone 300 includes a decoder 302. The decoder 302 is configured to receive voice communication signals from a remote device via a base station (e.g., a base station 104 depicted in FIG. 1). Voice communication signals received by the cellular telephone 300 represent the primary input to the cellular telephone 300. The decoder 302 includes a detector 304. The detector 304 detects non-speech signals within voice communication signals received by the cellular telephone 300. Specifically, the detector 304 can be configured to detect non-speech signals within the encoded voice signals received by the decoder 302. Alternatively, the detector 304 can be configured to detect non-speech signals within the decoded voice signal produced by the decoder 302. Under either scenario, the detector 304 can detect periods of on-hold music or on-hold silence within a digital input signal.

The cellular telephone 300 further includes a controller/processor 306. The controller 306 manages the operation of the cellular telephone 300. The controller 306 is shown connected to the decoder 302 and the encoder 208 but may be connected to any number of the constituent components of the receive and transmit paths of the cellular telephone 300. The controller 306 operates a display and keypad 308 and also manages and controls a memory 310 of the cellular telephone 300. The controller 306 can execute software applications stored within the memory 310.

The controller 306 is also connected to a number of secondary input sources contained within the cellular telephone 300. For example, the controller 306 is connected to a music player 312. The music player 312 can be a digital audio player such as, for example, an Motion Pictures Expert Group Layer 3 (MP3) player. The music player 312 is connected to a music storage device 314. The music storage device can be any memory device capable of storing digital audio such as, for example, a flash memory or a hard disk. The music player 312 can access and play digital audio stored within the music storage device 314. In this way, the music player 312 and the music storage device 314 can store and play audio files of a variety of formats including, for example, MP3 or WAV formats.

The controller 306 is also connected to a tuner/receiver 316. The tuner 316 is connected to an antenna 318. The tuner 316 can be a television tuner that receives terrestrially broadcasted television signals using the antenna 318. The controller 306 can manage video images received from television signals and provide them to the display 308 for viewing. Alternatively, the tuner 316 can be an AM or FM receiver. Received AM or FM signals can also be managed by the controller 306 and provided to a user.

As further shown in FIG. 3, the controller 306 is connected to a data transceiver 320. The data transceiver 320 is connected to an antenna 322. The data transceiver 320 transmits and receives data over a wireless link. The data transceiver 320 can be an ultra-wideband data transceiver or a high-bandwidth data transceiver such as for example, a Bluetooth® or Institute of Electrical and Electronics Engineers (IEEE) 802 (e.g., 802.11 x, 802.15 or 802.16) wireless data transceiver. The data transceiver 320 can provide the cellular telephone 300 with connectivity to a wireless local area network (LAN). The controller 306 can be configured to support the data communications link provided by the data transceiver 320.

The music player 312, the tuner 316 and the data transceiver 320 can be considered secondary input sources since they provide features that are supplemental or alternative to the primary voice communication functions of the cellular telephone 300. The features provided by the music player 312, the tuner 316 and the data transceiver 320 are typically used when the cellular telephone 300 is not engaged in a voice call with a remote device. Contrary to convention, the present invention allows the benefits of these secondary inputs to be exploited during periods of non-speech within an active voice call. Specifically, the controller 306 can toggle between providing a user with a decoded voice signal from the decoder 302 and a signal, feature or output of a secondary input source contained within the cellular telephone 300. For example, a switch 324 can be used by the controller 306 to interrupt or halt the provision of a decoded voice signal to the speaker 242 during detected non-speech signals. Further, the controller 306 can use the switch 324 to provide an audio output from one of the secondary input sources (e.g., the music player 312 or the tuner 316) during periods of non-speech.

Further features of the present invention, as they relate to (a) detection of non-speech signals, (b) provision of a secondary input and (c) user enhancement features, are discussed below. The foregoing and following discussions reference the cellular telephone 300 as a possible embodiment of the present invention. It should be noted, however, that the present invention is not limited to this embodiment. Specifically, the present invention is applicable to any communication device or system with a media decoder and having a primary input source and access to one or more secondary input sources. For example, the present invention may be applicable to communication devices such as, for example, Personal Digital Assistants (PDAs), digital or analog landline telephones or Private Branch Exchange (PBX) phones and/or systems. Further, the invention can be implemented with wireless email devices that include wireless phone service. In fact, the secondary source can be to provide the ability to check email during the non-speech signal.
Detection of Non-Speech Signals

The decoder 302 and/or the detector 304 can be used to detect non-speech signals within a voice communication signal received from a remote communication device. In a first embodiment of the present invention, the decoder 302 receives an indication from a corresponding encoder specifying the type of signal being sent. That is, the encoder sends an encoded voice signal accompanied by a label or flag. The flag is detected by the decoder 302. The flag signal can be used to distinguish encoded speech signals from encoded non-speech signals. Consequently, the decoder 302 can determine the beginning and end of a non-speech signal within a received encoded signal. Under this scenario, the flag signal must be accommodated by the received signal stream specified by the wireless protocol governing operation of the cellular telephone 300. Stated another way, the non-speech signal is indicated or identified by signaling or direct communication from the encoder to the decoder, using for example a control signal embedded in the received encoded signal.

In a second embodiment of the present invention, the detector 304 is a non-speech signal detector. The non-speech signal detector 304 can detect the presence of a non-speech signal in a received encoded signal. Alternatively, the non-speech signal detector 304 can be configured to detect the start and duration of a non-speech signal in a decoded signal produced by the decoder 302. Detection of non-speech signals by the detector 304 may be necessary when the wireless protocol governing operation of the cellular telephone 300 does not support the addition of signal labels. Detection of non-speech signals by the detector 304 may also be necessary if the encoder in a remote device is unaware of the capabilities of the cellular telephone 300 and therefore refrains from transmitting a signal label flag.

In yet another embodiment, a control signal indicating or identifying the non-speech signal is sent directly to the controller so as to trigger the use of the secondary source. In other words, the control signal is sent separate from the encoded input signal.
Provision of a Secondary Input

According to the present invention, the decoder 302 and/or detector 304 can alert the controller 306 of a non-speech signal. Specifically, the decoder 302 and/or detector 304 can provide an indication to the controller 306 when a non-speech signal is detected in a encoded signal or a decoded signal. Upon receipt of such an indication, the controller 306 can interrupt received voice communication signals and select a secondary input source to provide an alternative input to a user of the cellular phone 300.

The decoder 302 and/or the detector 304 can also alert the controller 306 of a speech signal. That is, the decoder 302 and/or detector 304 can provide the controller 306 with an indication of a resumed or new speech signal that occurs subsequent to the detection of an initial non-speech signal. In response to a detected speech signal, the controller 306 can stop providing an alternative input to the cellular phone 300 and reintroduce the received voice communication signal to the user. In this way, a user of the cellular telephone 300 listens to received voice communication signals during intervals of speech and does not listen to the received voice communication signals during periods of non-speech. Alternatively, the controller 306, under the possible direction of the user, can ignore the detection of a speech signal and can continue to provide an alternative input to the user of the cellular telephone 300.

As previously mentioned, the cellular telephone 300 contains a number of secondary sources. The cellular telephone 300 can also be configured to access a number of secondary sources not contained within the cellular telephone 300. For example, the cellular telephone can be connected by a wired link or wireless link to a computer or LAN. Any secondary source, whether internal or external to the cellular telephone 300, can be selected to override the primary input source during periods of non-speech within the primary input as discussed further below. It should be noted, however, that the capabilities of the present invention are not limited to the following examples. Further, herein, secondary sources may also be referred to as alternative sources.

In one example of the provision of a secondary input source, the controller 306 can instruct the internal music player 310 to play music stored in the music storage device 312.

In a second example of the provision of a secondary input source, the controller 306 can direct the tuner 316, as a television receiver, to receive a terrestrially broadcasted television signal using the antenna 318. Alternatively, the tuner 316 can be configured as a satellite television receiver capable of receiving and processing a received satellite television signal. The controller 306 and the tuner 316 can be configured to subsequently provide a video image from the received television signal to the display 308 as well as a corresponding audio track to the speaker 242.

In a third example of the provision of a secondary input source, the controller 306 can direct the tuner 316, as an AM/FM radio receiver, to receive an AM or FM broadcasted radio signal. The controller 306 and the tuner 316 can be configured to subsequently provide a received audio signal to the speaker 242. Alternatively, the tuner 316 can be configured as a satellite radio tuner capable of receiving and providing a satellite radio signal to the speaker 242.

In a fourth example of the provision of a secondary input source, the controller 306 can provide the ability to establish another telephone voice call during periods of non-speech. That is, a second phone call can be set up and established between the cellular telephone 300 and another remote device. For example, during periods of non-speech within a first call, a user of the cellular telephone 300 can enter a remote voicemail system to check, send or review messages when waiting for speech activity to resume on a first call.

In a fifth example of the provision of a secondary input source, the controller 306 can manage and manipulate a wired connection (not shown in FIG. 3) between the cellular phone 300 and a remote device. For example, the controller 306 can establish and manage a wired connection to a computer, server, LAN or telephone system. In this way, the controller 306 can provide a user with access to data, voice, audio or video signals over a wired connection.

In a sixth example of the provision of a secondary input source, the controller 306 can provide connectivity to a wireless LAN using the data transceiver 320. For example, the data transceiver 320 can be instructed to transmit and receive data, audio, voice or video signals over, for example, a Bluetooth® or IEEE 802 wireless connection. Further, the wireless network connection provided by the controller 306 and the data transceiver 320 can provide webcasted or streaming music to the music player 312 for playing. The wireless network connection provided by the controller 306 can be configured to provide an Internet connection enabling a user of the cellular telephone 300 to browse Web content such as, for example, news, sports, or other entertainment.

In a seventh example of the provision of a secondary input source, the controller 306 can block the decoded non-speech signal from being reproduced by the speaker 242 and not select a secondary input source. That is, the controller 306 can simply replace a decoded non-speech signal with silence.
User Enhancement Features

As previously mentioned, the controller 306 can manipulate and control the constituent components of the cellular telephone in response to a change in input source. For example, the controller 306 can launch and execute applications or programs associated with a selected alternative input. Programs associated with a selected secondary input source can be stored within the memory 310 and executed using the controller/processor 306. For example, after detection of a non-speech signal, the controller 306 can run a music program stored in the memory 310 to provide a music application to a user. The music application, for example, can provide use of the music player 312 along with interactive use of the display/keypad 308.

Other programs stored within the memory 310 and associated with a selected secondary input source can also be activated by the controller 306. Applications for viewing and manipulating data including, for example, sports, news, financial or weather information, received over a wireless LAN via the data transceiver 320 can be used during non-speech periods.

Further, according to the present invention, the experience of selecting an alternative input during periods of non-speech can also be enhanced. For example, the controller 306 can be used to execute a program stored in the memory 310 for managing the available secondary sources of the cellular telephone 300. The program can be used by a user to set a prioritized list of alternative input sources and to provide default selection preferences. Alternatively, the program can prompt the user for a secondary input source selection upon the detection of a non-speech signal, rather than automatically activating a default choice.

The controller 306 can also be configured to implement a toggle feature to switch between the primary input source and a secondary input source. Specifically, the controller 306 can be configured to automatically switch to a selected alternative input during periods of non-speech and to automatically switch back to the primary input (e.g., a telephone call) when the period of non-speech has ended. Alternatively, the controller 306 can be configured to alert the user of a new or resumed speech signal and provide the user with a choice whether or not to return to the primary input source. Further, the controller 306 can be configured to provide indication to the remote device that the user of the cellular telephone 300 has elected to not return to the primary input source, thereby placing the remote device on hold.

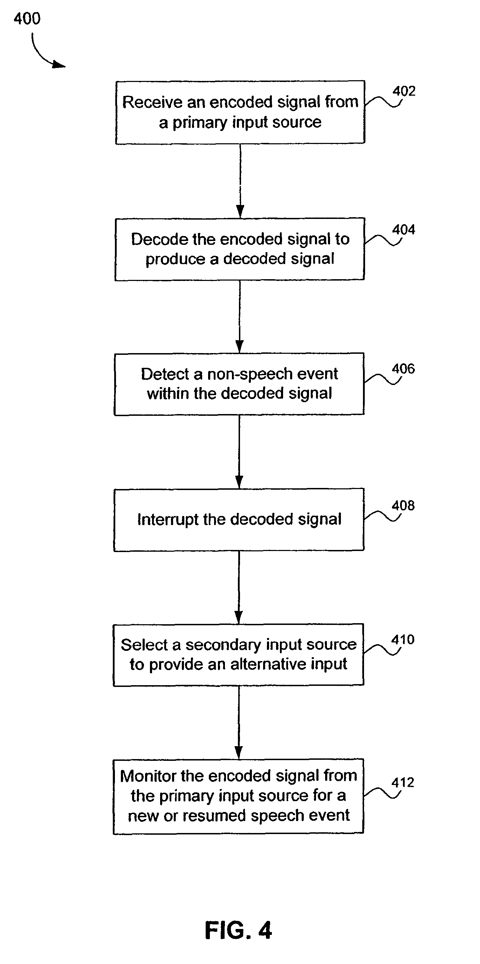

FIG.4 provides a flowchart 400 that illustrates operational steps for providing a user-selectable secondary input to a communication device upon the detection of a non-speech signal within a primary input to the communication device in accordance with the present invention. The invention is not limited to this operational description. Rather, it will be apparent to persons skilled in the relevant art(s) from the teachings herein that other operational control flows are within the scope and spirit of the present invention. In the following discussion, the steps in FIG. 4 are described.

At step 402, a communication device having a media decoder receives an encoded signal from a primary input source. The received signal can be encoded using a speech compression technique. The received signal can be any type of media signal including, for example, a voice communication signal. Further, the received signal can be sent by a remote communication device and received by the communication device over a wired or wireless communication link. The encoded signal includes periods of speech signals and periods of non-speech signals.

At step 404, the encoded signal is decoded to produce a decoded signal. The encoded signal can be decoded using the media decoder of the communication device. The encoded signal can be encoded by the remote communication device and/or by any intermediate device providing connectivity between the remote communication device and the communication device.

At step 406, a non-speech signal is detected within the decoded signal. The non-speech signal can include, for example, on-hold music or on-hold silence. The non-speech signal can be detected by a non-speech detector of the communication device. Under a first alternative scenario, the non-speech detector can detect the presence of a non-speech signal within the encoded signal received by the communication device. Under a second alternative scenario, the encoded signal is accompanied by a flag indicating the type of signal encoded. Under this scenario, the non-speech detector or the decoder can detect a non-speech signal by receiving and interpreting the flag in either the encoded or decoded signal.

At step 408, the decoded signal is interrupted. Specifically, the decoded signal is not supplied to an output of the communication device.

At step 410, a user-selectable secondary input source is provided to an output of the communication device. The secondary input source provides an alternative input to the communication device. Specifically, the secondary input source overrides the primary input source. Supporting software or applications associated with a selected secondary input source can be launched and executed during a user's interaction with the secondary input source.

At step 412, the communication device continues to receive encoded signals from the remote communication device as the secondary input source is provided to the communication device. The communication device monitors the encoded signals (or the corresponding decoded signals) for the presence of a new or resumed speech signal. When a new or resumed speech signal is detected, the secondary input source is interrupted and the primary input source is re-activated (i.e., supplied to an output of the communication device). Alternatively, when a new or resumed speech signal is detected, the secondary input source is not interrupted.
Conclusion

While various embodiments of the present invention have been described above, it should be understood that they have been presented by way of example and not limitation. It will be apparent to one skilled in the pertinent art that various changes in form and detail can be made therein without departing from the spirit and scope of the invention. Therefore, the present invention should only be defined in accordance with the following claims and their equivalents.

## Claims

1. A communication device, comprising:
a decoder to decode a received signal from a first source, the received signal including a non-speech signal;
a detector to detect the non-speech signal within the decoded signal; and
a controller to select a second source to provide an alternative input to the communication device upon detection of the non-speech signal.

2. The communication device of claim 1, wherein the received signal is a voice communication signal.

3. The communication device of claim 2, wherein the voice communication signal is encoded using a speech compression technique.

4. The communication device of claim 1, wherein the first source is a remote communication device.

5. A method for providing a user-selectable secondary input to a communication device upon detection of a non-speech signal within a primary input to the communication device, comprising:
receiving an encoded signal from the primary input;
decoding the encoded signal;
detecting a non-speech signal within the decoded signal; and
selecting the secondary input upon detection of the non-speech signal.

6. The method of claim 5, wherein decoding comprises decoding the encoded signal according to a speech compression technique.

7. A method for alternating between a primary input source and a secondary input source of a communication device, comprising:
receiving a first input signal from the primary input source, wherein the first input signal is encoded using a speech compression technique and includes periods of speech and periods of non-speech;
decoding the first input signal according to the speech compression technique to produce a decoded voice communication signal;
detecting a period of non-speech within the decoded voice communication signal;
interrupting the voice communication signal during the period of non-speech;
providing a second input signal from the secondary input source to the communication device during the period of non-speech.

8. A method for alternating between a primary input source and a secondary input source of a communication device, comprising:
receiving a first input signal from the primary input source, wherein the first input signal is encoded using a speech compression technique and includes periods of speech and periods of non-speech;
decoding the first input signal according to the speech compression technique to produce a decoded voice communication signal;
detecting the periods of speech and the periods of non-speech within the decoded voice communication signal;
providing the first input signal to an output of the communication device during the periods of speech;
providing a second input signal from the secondary input source to the communication device during the periods of non-speech.

9. A communications device, comprising:
a decoder configured to generate a decoded output signal responsive to receiving an encoded input signal, the decoded output signal coupled to an output of the communications device; and
an alternative signal source that replaces the decoded output signal with an alternative signal when the encoded input signal includes a non-speech signal.

10. The communication device of claim 9, wherein the encoded input signal is encoded using a speech compression technique, and the decoder is configured to decode the encoded input signal based on the speech compression technique used for encoding.
